# EUROPÄISCHE PATENTSCHRIFT

(11) **EP 1 363 010 B1**
(45) Veröffentlichungstag und Bekanntmachung des Hinweises auf die Patenterteilung: **18.11.2009**
(21) Anmeldenummer: 03450044.7
(22) Anmeldetag: 18.02.2003
(51) Int. Cl.: F02D 41/40, F02D 37/02, F02P 5/04, F02D 41/00, F02B 23/10

(54) **Verfahren zum Betreiben einer fremdgezündeten Viertakt-Brennkraftmaschine mit Mehrfacheinspritzung**
Method for operating a spark ignition four-stroke internal combustion engine with multiple injection
Procédé pour faire fonctionner un moteur à allumage commandé avec injection multiple

(30) Priorität: 07.05.2002 AT 28802 U
(43) Veröffentlichungstag der Anmeldung: 19.11.2003
(73) Patentinhaber: AVL List GmbH, 8020 Graz (AT)
(72) Erfinder: Kapus, Paul, Dr., 8111 Judendorf (AT)
(74) Vertreter: Babeluk, Michael

(56) Entgegenhaltungen:
- EP-A- 0 943 793
- EP-A- 1 130 241
- DE-A- 10 120 486
- US-B1- 6 345 499

## Beschreibung

Die Erfindung betrifft ein Verfahren zum Betreiben einer fremdgezündeten Viertakt-Brennkraftmaschine mit direkter Kraftstoffeinspritzung in zumindest einen Zylinder, wobei zumindest während der Leerlaufphase der Kraftstoff während eines Zyklus mehrmals eingespritzt wird, wobei zumindest während der Leerlaufphase eine erste Einspritzung während des Ansaugtaktes durchgeführt wird, wobei der Beginn der ersten Einspritzung in einem Bereich zwischen 0° und 70° Kurbelwinkel, vorzugsweise zwischen etwa 20° und 70° Kurbelwinkel nach dem oberen Totpunkt des Ladungswechsels erfolgt, und eine zweite Einspritzung während des Kompressionstaktes durchgeführt wird, wobei die Kraftstoffmenge der zweiten Einspritzung geringer ist als die Kraftstoffmenge der ersten Einspritzung, und wobei der Kraftstoffstrahl und/oder das Kraftstoff-Luftgemisch durch eine Rampe an der brennraumseitigen Kolbenoberfläche eines im Zylinder hin- und hergehenden Kolbens in Richtung der Zündeinrichtung gelenkt wird.

Es ist bekannt, dass fremdgezündete Brennkraftmaschinen mit direkter Einspritzung mit magerem Gemisch schadstoffarm und verbrauchsgünstig betrieben werden können. Insbesondere ist es dabei möglich, diese Vorteile dadurch zu steigern, dass relativ große Ventilüberschneidungen vorgesehen werden. Problematisch sind diese zum Erzielen hoher Leistungsdichte eingesetzten großen Ventilüberschneidungen allerdings im Leerlauf, in welchem Stabilitätsprobleme auftreten.

Es ist bekannt, dass bei einer Brennkraftmaschine durch Mehrfacheinspritzung die Verbrennungsstabilität während des Leerlaufes und bei Teillast erhöht werden kann. Die EP 1 108 877 A2 beschreibt eine fremdgezündete Brennkraftmaschine mit direkter Einspritzung, bei der zur Verbesserung der Verbrennungsstabilität im niedrigen Lastbereich und im Leerlauf eine mehrfache Einspritzung während der Kompressionsphase durchgeführt wird. Die erste Einspritzung erzeugt ein mageres Luft-Kraftstoffgemisch um die Zündkerze, die zweite Einspritzung erzeugt ein entflammbares Luft-Kraftstoffgemisch im Zündkerzenbereich. Durch diese geschichtete Verbrennung können Abgase und Kraftstoffverbrauch verbessert werden. Da beide Einspritzungen während des Kompressionstaktes stattfinden kann aber kein homogenes Grundgemisch ausgebildet werden.

Weiters ist es bekannt, im oberen Lastbereich eine Mehrfacheinspritzung durchzuführen, um die Gemischaufbereitung zu verbessern und die Leistung zu erhöhen. In der EP 0 369 480 A2 ist eine Brennkraftmaschine gezeigt, bei der im oberen Lastbereich eine Doppeleinspritzung durchgeführt wird, wobei eine erste Einspritzung in der ersten Hälfte des Einlasstaktes und eine zweite Einspritzung während des Kompressionstaktes erfolgt.

Die EP 0 943 793 A2 offenbart eine direkt einspritzende Brennkraftmaschine, bei der in zumindest einem Betriebsbereich eine Schichtladung im Brennraum innerhalb eines mageren homogenen Kraftstoffgemisches erzeugt wird.

Die EP 1 128 048 A1 beschreibt eine fremdgezündete Brennkraftmaschine mit direkter Kraftstoffeinspritzung in einen Brennraum. Um Klopfen bei erhöhtem Verdichtungsverhältnis zu vermeiden, wird Kraftstoff im mittleren bis hohen Teillastbereich während des Kompressionstaktes eingespritzt, um eine geschichtete Verbrennung durchzuführen. Während der geschichteten Verbrennung wird vor dieser Kraftstoffeinspritzung des Verdichtungstaktes eine Einspritzung auch während des Einlasstaktes in solch einem Ausmaß durchgeführt, dass eine Selbstzündung des Kraftstoffes vermieden wird. Im niedrigen Lastbereich wird bei der EP 1 128 048 A1 eine Einspritzung nur während der Kompressionsphase durchgeführt. Erst bei mittlerer und höherer Last erfolgt auch eine Einspritzung während des Ansaugtaktes. Die Verbrennungsstabilität im Bereich des Leerlaufes kann durch diese Maßnahmen allerdings nicht erhöht werden.

Die DE 198 29 308 A1 offenbart eine Regeleinrichtung für einen Ottomotor mit Direkteinspritzung, bei dem die Einspritzung ebenfalls in zwei Schritten, und zwar während des Ansaugtaktes und während des Kompressionstaktes, erfolgt. Die Gesamteinspritzmenge wird dabei in eine Einspritzmenge während des Ansaugtaktes für homogene Verbrennung und eine Einspritzmenge während des . Verdichtungstaktes für geschichtete Verbrennung unterteilt. Maßnahmen zur Erhöhung der Verbrennungsstabilität während des Leerlaufes gehen aus dieser Veröffentlichung nicht hervor.

Aus der US 2001/0015192 A1 ist eine Benzin-Brennkraftmaschine bekannt, welche bei Teillast mit einem mageren Luft/Kraftstoffgemisch selbstgezündet betrieben wird. Bei Volllast dagegen wird die Brennkraftmaschine fremdgezündet betrieben.

Die US 6,257,197 B1 handelt über ein Regelsystem für eine direkteinspritzende fremdgezündete Brennkraftmaschine, deren Auslasssystem einen NOₓ-Katalysator aufweist. Während des Einlasstaktes wird im Teillastbereich eine Mehrfacheinspritzung durchgeführt.

Bei keiner der genannten Veröffentlichungen kann die Verbrennungsstabilität im Leerlauf bedeutend verbessert werden.

Aufgabe der Erfindung ist es, bei einer Brennkraftmaschine der eingangs genannten Art die Verbrennungsstabilität insbesondere im Bereich des Leerlaufes zu erhöhen.

Erfindungsgemäß wird dies dadurch erreicht, dass die Steuerzeiten der Auslassventile um etwa 20° bis 50° Kurbelwinkel nach spät verstellt werden, wobei der bei 1 mm Resthub definierte Auslassschluss bei etwa 5° bis 40°, vorzugsweise bei etwa 20°, nach dem oberen Totpunkt des Ladungswechsels eingestellt wird, dass der Beginn der zweiten Einspritzung bei 60° bis 30° Kurbelwinkel vor dem oberen Totpunkt der Zündung erfolgt, dass der Kraftstoff in Richtung einer Einlass-Walzenströmung eingespritzt wird und dass die Zündung des Kraftstoff-Luftgemisches etwa im Bereich von 5° bis 30°, vorzugsweise zwischen 10° und 15° Kurbelwinkel nach dem oberen Totpunkt der Zündung erfolgt.

Die erste Einspritzung erfolgt zu einem Zeitpunkt, zu welchem sichergestellt ist, dass sich zum Zündungszeitpunkt im Bereich der Zündkerze eine Kraftstoffwolke bildet, die eine Zündung sicher gewährleistet.

Dadurch, dass der Beginn der ersten Einspritzung in einem Bereich zwischen etwa 20° und 70° Kurbelwinkel nach dem oberen Totpunkt des Ladungswechsels erfolgt, kann ein homogenes Grundgemisch erzeugt werden. Durch die zweite Einspritzung in einem Bereich von 60° bis 30° vor dem oberen Totpunkt der Zündung wird eine Ladungsschichtung im Bereich der Zündquelle ermöglicht. Bei der ersten und der zweiten Einspritzung kann etwa die gleiche Kraftstoffmenge eingespritzt werden. Vorteilhafter hinsichtlich Verbrauch und Emissionen ist es allerdings, wenn die Kraftstoffmenge der zweiten Einspritzung geringer ist, als die Kraftstoffmenge der ersten Einspritzung, wobei vorzugsweise die Kraftstoffmenge der zweiten Einspritzung zwischen 15% bis 35%, vorzugsweise etwa 25%, der Gesamteinspritzmenge beträgt. Durch die sehr frühe erste Einspritzung wird gewährleistet, dass auch in den übrigen Bereichen des Brennraumes eine gleichmäßige Kraftstoffverteilung erfolgt. Somit kann ein ruhiger Abbrand und eine niedrige Schadstoffbelastung gewährleistet werden.

Dadurch, dass der Zündungszeitpunkt etwa im Bereich von 5° bis 30°, vorzugsweise zwischen 10° und 15°, nach dem oberen Totpunkt der Zündung kann eine rasche Aufheizung eines im Abgassystem vorhandenen Katalysators ermöglicht werden. Die Verbrennung kann über die zweite Einspritzung stabilisiert werden.

Indem die Steuerzeiten der Auslassventile um etwa 20° bis 50° Kurbelwinkel nach spät verstellt werden, wobei der Auslassschluss bei etwa 5° bis 40°, vorzugsweise bei etwa 20°, nach dem oberen Totpunkt des Ladungswechsels eingestellt wird, kann die Gemischaufbereitung verbessert und die Emissionen verringert werden. Ein Resthub des Auslassventiles von etwa 1 mm wird hier als Auslassschluss definiert. Dies ermöglicht eine Restgasrückführung, wobei heißes Restgas vom Auslasskanal in den Zylinder gesaugt wird.

Zur Durchführung des Verfahrens eignet sich eine fremdgezündete ViertaktBrennkraftmaschine mit einem hin- und hergehenden Kolben pro Zylinder und zumindest einer in den Zylinder einmündenden Kraftstoffeinspritzung zur direkten Kraftstoffeinspritzung, bei der der Kolben an seiner brennraumseitigen Oberfläche eine Rampe aufweist, welche den eingespritzten Kraftstoff und/oder das Kraftstoff-Luftgemisch zur Zündeinrichtung ablenkt. Die Rampe weist eine Leitfläche auf, welche mit einer Parallelen zur Zylinderachse einen Winkel zwischen etwa 0° und 20° einschließt, wobei die Rampe in der dem Injektor abgewandten Kolbenhälfte angeordnet ist. Zur Generierung einer Ladungsbewegung ist zumindest ein Einlasskanal tumbleerzeugend ausgebildet. Der Injektor weist eine flache Einbaulage auf, wobei der Winkel zwischen Einspritzstrahlachse und Zylinderkopfebene zwischen 20° und 45° beträgt. Durch die flache Injektoreinbaulage erfolgt die Einspritzung im Wesentlichen parallel zur Richtung des Einlasstumbles. Dies ermöglicht eine Verstärkung der Ladungsbewegung. Durch die Doppeleinspritzung (teilgeschichtet) ist zusätzlich ein Wegblasen von Restgas vom Zündkerzenbereich möglich, wobei die Restgastoleranz steigt. Durch die höhere Restgastoleranz kann mehr Abgas rückgeführt und somit der Verbrauch durch Entdrosselung verbessert werden.

Um dies zu erreichen, ist es besonders vorteilhaft, wenn der Abstand zwischen der Rampe und dem dem Injektor abgewandten Kolbenrand etwa 10% bis 40%, vorzugsweise 14% bis 35% des Kolbendurchmessers beträgt.

Die Erfindung wird im Folgenden anhand der Figuren näher erläutert. Es zeigen schematisch:
- Fig. 1, 2 und 3,: einen Zylinder einer Brennkraftmaschine für das erfindungsgemäße Verfahren in drei verschiedenen Kolbenstellungen,
- Fig. 4: die Einspritzereignisse über dem Kurbelwinkel aufgetragen,
- Fig. 5: einen zur Durchführung des erfindungsgemäßen Verfahrens geeigneten Kolben in einer Schrägansicht,
- Fig. 6: den Kolben in einem Grundriss,
- Fig. 7: den Kolben in einem Schnitt gemäß der Linie VII-VII in Fig. 6 und
- Fig. 8: das Detail VIII aus Fig. 7.

In einem Zylinder 1 ist ein hin- und hergehender Kolben 2 angeordnet. An der einem Brennraum 3 zugewandten Oberfläche 4 des Kolbens 2 ist eine Rampe 5 angeordnet. Die Brennkraftmaschine weist pro Zylinder 1 mindestens einen eine Walzenströmung erzeugenden Einlasskanal 6 auf, welcher durch ein Einlassventil 7 gesteuert wird. Im Bereich der Zylinderachse 8 ist eine Zündeinrichtung 9 angeordnet. Am Rand des Brennraumes 3 mündet einlassseitig im Zylinderkopfboden 19 ein flach eingebauter Injektor 10 zur direkten Kraftstoffeinspritzung in den Brennraum 3 ein. Die Strahtachse 10a des Injektors 10 spannt mit der Zylinderkopfebene 20 einen Winkel α von etwa 20° bis 40° auf.

Die Rampe 5 ist in der dem Injektor 10 abgewandten Hälfte des Kolbens 2 angeordnet, wobei der Abstand A zwischen dem Kolbenrand 11 und der Rampe 5 etwa 20% bis 40%, vorzugsweise zwischen 30% bis 40°, des Kolbendurchmessers D beträgt. Im Bereich der Rampe 5 ist einlassseitig eine Kolbenmulde 12 in der Oberfläche 4 des Kolbens 2 ausgebildet. Die Höhe h zwischen dem tiefsten Punkt der Kolbenmulde 12 und dem höchsten Punkt der Rampe 5 beträgt mindestens 8 mm. Eine gute Leerlaufstabilität lässt sich erreichen, wenn während der Leerlaufphase im Bereicht des oberen Totpunktes LOT des Ladungswechsels und während des Kompressionstaktes der Kraftstoff in den Zylinder eingespritzt wird.

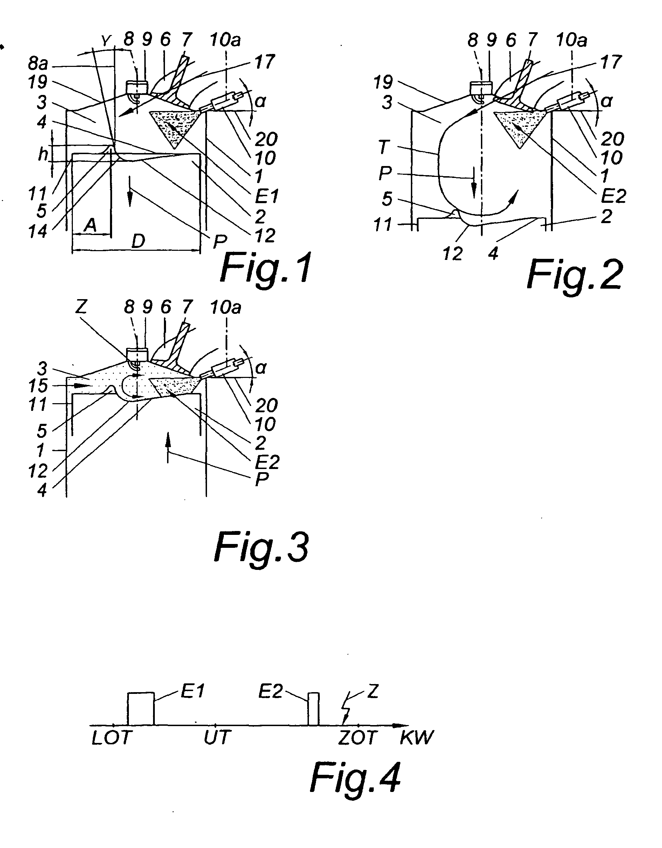

Wie in der Fig. 1 bis 4 gezeigt ist, erfolgt die erste Einspritzung E₁ während des Einlasstaktes gleichsinnig mit der Einlassströmung 17 aus dem Einlasskanal 6. Der Einlasskanal 6 ist dabei tumbleerzeugend ausgebildet, so dass innerhalb des Zylinders 1 eine von der Einlassseite zur Auslassseite zum Kolben 2 verlaufende Tumbleströmung T erzeugt wird. Wie in der Fig. 1 und 2 dargestellt ist, ist der Einspritzimpuls der ersten Einspritzung E₁, deren Beginn vorteilhafterweise zwischen 20° und 70° Kurbelwinkel KW nach dem oberen Totpunkt LOT des Ladungswechsels erfolgt, gleichsinnig zur Tumbleströmung T ausgebildet. Bis zur Zündung Z entsteht im Brennraum 3 ein homogenes Gemisch 15. Kurz vor der Zündung Z wird durch die zweite Einspritzung E₂ während des Kompressionstaktes Restgas von der Zündeinrichtung 9 weggeblasen und ein fettes Gemisch um die Zündeinrichtung 9 erzeugt. Die zweite Einspritzung E₂ erfolgt mit geringerer Kraftstoffmenge als die erste Einspritzung E₁ etwa 60° bis 30° Kurbelwinkel KW vor dem oberen Totpunkt ZOT der Zündung Z. Die Zündung Z erfolgt relativ spät im Bereich von etwa 5° bis 30° Kurbelwinkel KW nach dem oberen Totpunkt ZOT der Zündung Z, um eine rasche Aufwärmung eines nicht weiter dargestellten Katalysators im Abgasstrang zu ermöglichen.

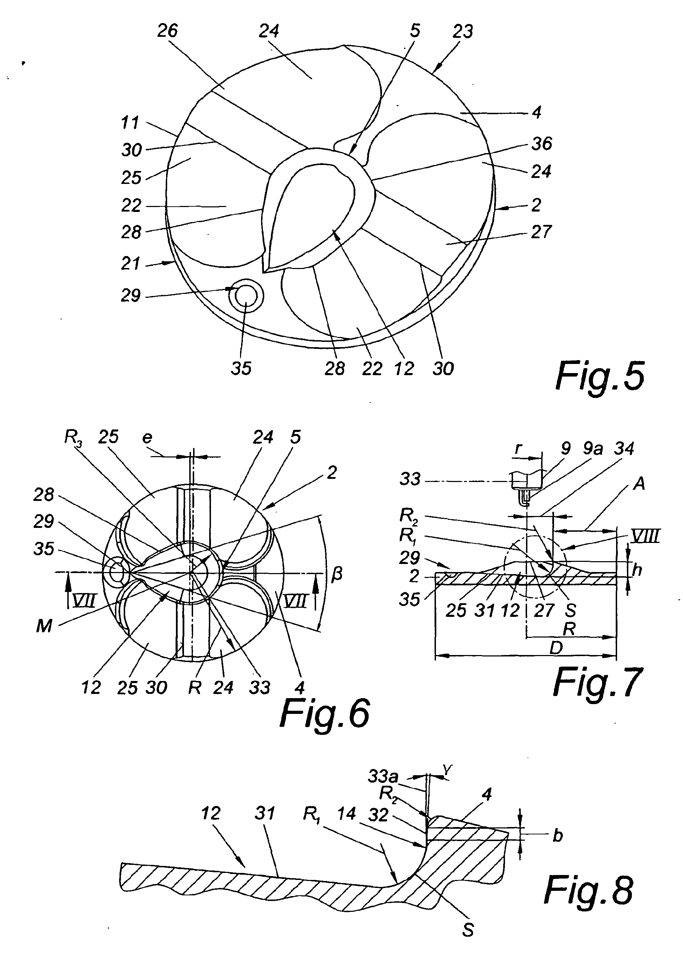

Der für das Verfahren am Besten geeignete Kolben 2 mit Rampe 5 ist in der Fig. 5 bis 8 im Detail gezeigt.

Der Kolben 2 weist eine Kolbenoberfläche 4 auf, in welche eine etwa zentrale Kolbenmulde 12 eingeformt ist. Die Kolbenoberfläche 4 weist weiters auf der Einlassseite 21 Ausnehmungen 22 für den Freigang von Einlassventilen 7 und auf der Auslassseite 23 Ausnehmungen 24 für den Freigang von nicht weiter dargestellten Auslassventilen auf. Die Ausnehmungen 22, 24 laufen zum Kolbenrand 11 aus und verschneiden sich mit der Kolbenmulde 12, so dass die Kolbenmulde 12 etwa mittig zwischen den Ausnehmungen 22, 24 angeordnet ist. Die Oberfläche 4 und/oder die Ausnehmungen 22, 24 sind - zumindest teilweise - dachförmig geformt und einem dachförmigen Zylinderkopfboden 19 angepasst. Zwischen den Dachflächen 25, 26 ist eine im Wesentlichen ebene Giebelfläche 27 normal auf die Kolbenachse 28 ausgebildet.

Die Kolbenmulde 12 ist - im Grundriss betrachtet - tropfenförmig gestaltet und zumindest im Bereich der Seitenflächen 28 einem von einem Einspritzbereich 29 ausgehenden Einspritzstrahl nachempfunden, welcher an der Strahlwurzel einen Einspritzstrahlkegel von etwa 60° bis 75° aufweist. Der Öffnungswinkel β der Seitenflächen 28 beträgt im Bereich von Verschneidungskanten 30 zwischen den Ausnehmungen 22 und der Giebelfläche 27 im Ausführungsbeispiel etwa 35°. Dadurch wird gewährleistet, dass der Strahl die Seitenflächen 28 der Kolbenmulde 12 nicht benetzt.

In Richtung der Einlassseite 21 läuft die Kolbenmulde 12 zum Einspritzbereich 29 der Oberfläche 4 des Kolbens 2 aus.

Auf der Auslassseite 23 weist die Kolbenmulde 12 eine Rampe 5 auf. Zwischen dem Muldenboden 31 und der durch die Rampeninnenseite gebildeten Strömungsleitfläche 14 ist ein erster Krümmungsradius R₁ eingeformt, welcher mindestens 5 mm beträgt. Zwischen der Strömungsleitfläche 14 und der Oberfläche 4 des Kolbens 2 ist ein zweiter Krümmungsradius R₂ von etwa 1 bis 1,5 mm vorgesehen. Zwischen dem ersten Krümmungsradius R₁ und dem zweiten Krümmungsradius R₂ weist die Profillinie s der Kolbenmulde 12 einen geraden Übergangsbereich 32 mit einer Höhe b von mindestens 0,5 mm auf, wie aus Fig. 7 und 8 hervorgeht. Der Übergangsbereich 32 kann zu einer Kolbenachsenparallelen 33a um einen Winkel γ im Ausmaß von 0 bis 20° geneigt sein.

Im Grundriss gesehen, ist der Rand 36 der Kolbenmulde 12 auf der Auslassseite 23 kreissegmentförmig und weist einen Radius R₃ auf, welcher etwa zwischen 30 bis 40 % des Kolbenradius R entspricht. Der Mittelpunkt M dieses Radius R₃ kann mit einer geringen Exzentrizität e bezüglich der Kolbenachse 33 ausgebildet sein. Die in Fig. 7 angedeutete Zündquelle 9a ist etwa im Bereich der Kolbenachse 33 angeordnet. Der Abstand 34 zwischen der Rampe 5 und der Zündquelle 9a der Zündeinrichtung 9 beträgt mindestens dem Halbmesser r der Zündeinrichtung 9.

Im Einspritzbereich 29 weist der Kolben 2 im Ausführungsbeispiel eine Injektorfreistellung 35 für den Freigang des Injektors 10 auf.

Die Höhe h zwischen tiefster Stelle des Kolbenbodens 31 und der höchsten Stelle der Giebelfläche 27 bzw. der Rampe 5 beträgt im Ausführungsbeispiel etwa 15 bis 20 % des Kolbenradius R, mindestens aber etwa 8 mm.

Der über den seitlich in einem Zylinderkopfboden 19 angeordneten, Injektor 10 in die Kolbenmulde 12 eingespritzte Kraftstoff trifft auf den Kolbenboden 31 und wird über die Strömungsleitfläche 14 in Richtung einer im Zylinderkopfboden angeordneten Zündeinrichtung 9 gelenkt. Im Bereich um die Zündeinrichtung 9 kommt es dadurch zu einer ausgeprägten Ladungsschichtung. In Kombination mit einem späten Auslassschluss zwischen 5 bis 40° nach dem oberen Totpunkt LOT des Ladungswechsels zur Durchführung einer internen Abgasrückführung kann insbesondere bei Hochleistungsmotoren eine deutliche Absenkung der NOx-Emissionen ohne Verbrauchsnachteile erreicht werden. Zündwinkel von etwa 10° bis 15° Kurbelwinkel KW nach dem oberen Totpunkt ZOT haben sich dabei als besonders günstig erwiesen.

## Patentansprüche

1. Verfahren zum Betreiben einer fremdgezündeten Viertakt-Brennkraftmaschine mit direkter Kraftstoffeinspritzung in zumindest einen Zylinder (1), wobei zumindest während der Leerlaufphase der Kraftstoff während eines . Zyklus mehrmals eingespritzt wird, wobei zumindest während der Leerlaufphase eine erste Einspritzung (E₁) während des Ansaugtaktes durchgeführt wird, wobei der Beginn der ersten Einspritzung (E₁) in einem Bereich zwischen 0° und 70° Kurbelwinkel (KW), vorzugsweise zwischen etwa 20° und 70° Kurbelwinkel (KW) nach dem oberen Totpunkt (LOT) des Ladungswechsels erfolgt, und eine zweite Einspritzung (E₂) während des Kompressionstaktes durchgeführt wird, wobei die Kraftstoffmenge der zweiten Einspritzung (E₂) geringer ist als die Kraftstoffmenge der ersten Einspritzung (E₁), und wobei der Kraftstoffstrahl und/oder das Kraftstoff-Luftgemisch durch eine Rampe (5) an der brennraumseitigen Kolbenoberfläche (4) eines im Zylinder (1) hin- und hergehenden Kolbens (2) in Richtung der Zündeinrichtung (9) gelenkt wird, **dadurch gekennzeichnet, dass** die Steuerzeiten der Auslassventile um etwa 20° bis 50° Kurbelwinkel nach spät verstellt werden, wobei der bei 1 mm Resthub definierte Auslassschluss bei etwa 5° bis 40°, vorzugsweise bei etwa 20°, nach dem oberen Totpunkt (LOT) des Ladungswechsels eingestellt wird, dass der Beginn der zweiten Einspritzung (E₂) bei 60° bis 30° Kurbelwinkel (KW) vor dem oberen Totpunkt (ZOT) der Zündung (Z) erfolgt, dass der Kraftstoff in Richtung einer Einlass-Walzenströmung (T) eingespritzt wird und dass die Zündung (Z) des Kraftstoff-Luftgemisches etwa im Bereich von 5° bis 30°, vorzugsweise zwischen 10° und 15° Kurbelwinkel (KW) nach dem oberen Totpunkt (ZOT) der Zündung (Z) erfolgt.

2. Verfahren nach Anspruch 1, **dadurch gekennzeichnet, dass** die Kraftstoffmenge der zweiten Einspritzung (E₂) zwischen 15% bis 35%, vorzugsweise etwa 25%, der Gesamteinspritzmenge beträgt.

## Claims

1. A method for operating a spark-ignited four-stroke internal combustion engine with direct fuel injection in at least one cylinder (1), with the fuel being injected several times during a cycle at least during the idling phase, with a first injection (E₁) being performed during the intake period during the idling phase, with the start of the first injection (E₁) occurring in a region between 0° and 70° of crank angle (KW) after the upper dead center (LOT) of the charge cycle, and a second injection (E₂) occurring during the compression cycle, with the fuel quantity of the second injection (E₂) being lower than the fuel quantity of the first injection (E₁), and with the fuel jet and/or the fuel/air mixture being guided in the direction of the ignition device (9) by a ramp (5) on the piston surface (4) on the combustion side of a piston (2) reciprocating in the cylinder (1), **characterised in that** the control times of the exhaust valves are adjusted by approximately 20° to 50° of crank angle to late, with the end of the exhaust defined at approx. 1 mm of residual stroke being set to approx. 5° to 40°, preferably approx. 20°, after the upper dead center (LOT) of the charge cycle, the beginning of the second injection (E₂) occurs at 60° to 30° of crank angle (KW) before the upper dead center (ZOT) of the ignition (Z), the fuel is injected in the direction of an intake rolling flow (T), and the ignition (Z) of the fuel/air mixture occurs approximately in the range of 5° to 30°, preferably between 10° and 15°, of crank angle (KW) after the upper dead center (ZOT) of the ignition (Z).

2. A method according to claim 1, **characterised in that** the fuel quantity of the second injection (E₂) is between 15% and 35%, preferably approx. 25%, of the total injection quantity.

## Revendications

1. °) Procédé de gestion d'un moteur à combustion interne à quatre temps et à allumage commandé, à injection directe de carburant dans au moins un cylindre (1) selon lequel :
- au moins pendant la phase de ralenti, le carburant est injecté plusieurs fois au cours d'un cycle,
- au moins pendant la phase de ralenti, une première injection (E₁) est faite au cours du temps d'admission,
- le début de la première injection (E₁) se situe dans une plage d'angle de vilebrequin (KW) comprise entre 0° et 70° de préférence environ entre 20° et 70° après le point mort haut (LOT) du changement de charge et une seconde injection (E₂) est faite au cours du temps de compression,
- la dose de carburant de la seconde injection (E₂) est plus faible que la dose de carburant de la première injection (E₁) et
- le jet de carburant et/ou le mélange air/carburant est dirigé par une rampe (5), en direction de l'installation d'allumage (9), sur la surface supérieure (4) du piston, côté chambre de combustion d'un piston (2) qui se déplace suivant un mouvement alternatif dans le cylindre (1),
**caractérisé en ce que**
- les durées de commande des soupapes d'échappement sont réglées dans le sens du retard d'environ 20° jusqu'à 50° d'angle de vilebrequin,
- la fin de l'échappement défini par une course résiduelle de 1 mm est réglée à environ 5° jusqu'à 40°, de préférence à environ 20° après le point mort haut (LOT) du changement de charge,
- le début de la seconde injection (E₂) se fait à 60° jusqu'à 30° de l'angle de vilebrequin (KW) avant le point mort haut (ZOT) de l'allumage (Z),
- le carburant est injecté dans le sens d'un écoulement cylindrique d'admission (T) et
- l'allumage (Z) du mélange air/carburant est fait sensiblement dans une plage comprise entre 5° et 30°, de préférence comprise entre 10° et 15° d'angle de vilebrequin (KW) après le point mort haut (ZOT) de l'allumage (Z).

2. °) Procédé selon la revendication 1,
**caractérisé en ce que**
la dose de carburant de la seconde injection (E₂) est comprise entre 15% et 35%, et elle est représentée de préférence de l'ordre de 25% de la dose totale injectée.
